# EUROPEAN PATENT APPLICATION

(11) **EP 2 562 996 A1**
(43) Date of publication of application: **27.02.2013**
(21) Application number: 10850092.7
(22) Date of filing: 19.07.2010
(51) Int. Cl.: H04M 1/725, H04M 1/2745

(54) **MOBILE TERMINAL AND METHOD FOR ADDING NEW CONTACTS INFORMATION**

(30) Priority: 21.04.2010 CN 201010153779
(71) Applicant: ZTE Corporation, Shenzhen, Guangdong 518057 (CN)
(72) Inventor: ZHANG, Benquan, Shenzhen Guangdong 518057 (CN); HUANG, Qinbo, Shenzhen Guangdong 518057 (CN)
(74) Representative: Carangelo, Pierluigi
(86) International application number: PCT/CN2010/075265
(87) International publication number: WO 2011/130959

(57) **Abstract**

Disclosed are a mobile terminal and a method for adding contact information. The mobile terminal includes: an input module, configured for providing an interface for adding a plurality of contacts including an input control and a clear control, wherein the input control is configured for generating an input instruction according to an operation of a user and the clear control is configured for generating a clear instruction according to the operation of the user; a control module, configured for adding information of the plurality of contacts according to the input instruction from the input module and deleting the information of the plurality of contacts on the interface for adding a plurality of contacts according to the clear instruction from the clear control; and a storage module, configured for storing the information of the plurality of contacts added by the control module. By way of the present invention, the flow of storing contact information is simplified and user experience is improved.

## Description

### Field of the Invention

The present invention relates to the communication field, and particularly to a mobile terminal and a method for adding contact information.

### Background of the Invention

Telephone book is used to store the contact list of the user and is one of the basic applications of mobile terminals such as mobile phone. With the development of mobile communication and the popularization of the mobile phone, people increasingly tend to store the contact information in mobile terminals such as mobile phone.

Currently, only one contact can be added each time during the create operation of the telephone book application in the mobile terminal. When the user wishes to store a large number of contacts into mobile terminals such as mobile phone, the storage via the create operation is a cumbersome process, and the user has to continuously selecting the create item in the menu or continuously clicks the create button on the interface to complete the operation of adding a large number of contacts. It brings lots of inconvenience to the user.

In addition to storing contacts in the telephone book, applications such as call records, short messages, and multimedia messages also include contact numbers. Currently, the mobile terminals have the function of storing the numbers of applications such as call records into the telephone book application. However, the inventors have found that only one number can be stored each time, and when there are many contacts not stored in applications such as call records, it is also a cumbersome process to store them one by one.

### Summary of the Invention

The main object of the present invention is to provide a mobile terminal and a method for adding contact information, so as to solve the problem in the related art that the operation for the mobile terminal to add a plurality of numbers is relatively cumbersome and user experience is negatively affected.

In order to achieve the above object, a mobile terminal is provided according to one aspect of the present invention. The mobile terminal includes: an input module, configured for providing an interface for adding a plurality of contacts, wherein the interface includes an input control and a clear control, the input control is configured for generating an input instruction according to an operation of a user, and the clear control is configured for generating a clear instruction according to the operation of the user; a control module, configured for adding information of a plurality of contacts according to the input instruction from the input module and deleting the information of the plurality of contacts on the interface for adding a plurality of contacts according to the clear instruction from the clear control; and a storage module, configured for storing the information of the plurality of contacts added by the control module.

Furthermore, this mobile terminal further comprises: a select module, configured for extracting information of the plurality of contacts from call records; the input module is further configured for providing the extracted information of the plurality of contacts on the interface for adding a plurality of contacts and setting a function of being able to be selected for the extracted information of the plurality of contacts.

Furthermore, this mobile terminal further comprises: a setting module, configured for providing a setting control in the interface for adding a plurality of contacts, wherein the setting module is configured for accepting the user to set storage locations of the information of the plurality of contacts; and the storage module is configured for storing the information of the plurality of contacts in the storage locations.

Furthermore, the input module is further configured for providing a manner control in the interface for adding a plurality of contacts, wherein the manner control is configured for accepting the user to designate the number of contacts to be added; and the control module is further configured for stopping adding information of the plurality of contacts when the number of the added information of the plurality of contacts is equal to the number of contacts to be added designated by the user.

Furthermore, the storage module comprises a subscriber identity module (SIM) card and/or a built-in memory of the mobile terminal.

In order to achieve the above object, a method for adding contact information is provided according to another aspect of the present invention. The method comprises: a mobile terminal receiving an input instruction generated by an operation of a user on an interface for adding a plurality of contacts and adding information of a plurality of contacts according to the input instruction; storing the added information of the plurality of contacts; and the mobile terminal receiving a clear instruction generated by the operation of the user on the interface for adding a plurality of contacts and deleting the information of the plurality of contacts on the interface for adding a plurality of contacts according to the clear instruction.

Furthermore, before the mobile terminal receiving the input instruction generated by the operation of the user on the interface for adding a plurality of contacts and adding the information of the plurality of contacts according to the input instruction, the method further comprises: the mobile terminal extracting information of the plurality of contacts from call records; and providing the extracted information of the plurality of contacts on the interface for adding a plurality of contacts, setting a function of being able to be selected for the extracted information of the plurality of contacts, and the mobile terminal adding the extracted information of the plurality of contacts according to the input instruction generated by the operation of the user.

Furthermore, before the mobile terminal receiving the input instruction generated by the operation of the user on the interface for adding a plurality of contacts and adding the information of the plurality of contacts according to the input instruction, the method further comprises: the mobile terminal accepts the user to set storage locations for the information of the plurality of contacts; and storing the information of the plurality of contacts in the storage locations.

Furthermore, the method further comprises: before the mobile terminal receiving the input instruction generated by the operation of the user on the interface for adding a plurality of contacts and adding the information of the plurality of contacts according to the input instruction, the mobile terminal accepting the user to designate a number of contacts to be added via the interface for adding a plurality of contacts; and after storing the added information of the plurality of contacts, stopping adding the information of the plurality of contacts when the number of the added information of the plurality of contacts is equal to the number of contacts to be added designated by the user.

Furthermore, the storage locations comprise a subscriber identity module (SIM) card and/or a built-in memory of the mobile terminal.

In the present invention, the input module is used to provide controls to receive the operations from the user so as to generate an input instruction or a clear instruction. The control module adds information of the plurality of contacts according to the input instruction, and then the storage module stores the contact information managed by the control module. It solves the problem in the related art that it is cumbersome to add a plurality of numbers in the mobile terminal at one time, and thus affecting user experience. Thus, it achieves the effect of simplifying the flow of storing contact information and improving user experience.

### Brief Description of the Drawings

The drawings illustrated herein provide a further understanding of the present invention and form a part of the present application. The exemplary embodiments and the description thereof are used to explain the present invention without unduly limiting the scope of the present invention. In the drawings:
Fig. 1 is a structural block diagram of a mobile terminal according to the embodiments of the present invention;
Fig. 2 is a structural block diagram of a mobile terminal according to a preferred embodiment of the present invention;
Fig. 3 is a structural block diagram of a mobile terminal according to another preferred embodiment of the present invention;
Fig. 4a is a structural block diagram I of a mobile terminal according to yet another preferred embodiment of the present invention;
Fig. 4b is a structural block diagram II of a mobile terminal according to yet another preferred embodiment of the present invention;
Fig. 5 is a structural block diagram of a mobile terminal according to still another preferred embodiment of the present invention;
Fig. 6 is a flowchart of a method for adding contact information according to the embodiments of the present invention;
Fig. 7 is a flowchart of a method for adding contact records according to a preferred embodiment of the present invention;
Fig. 8 is a flowchart of a method for adding contact records according to another preferred embodiment of the present invention;
Fig. 9 is a flowchart of a method for adding contact records according to yet another preferred embodiment of the present invention; and
Fig. 10 is a flowchart of a method for adding contact records according to still another preferred embodiment of the present invention.

### Detailed Description of Embodiments

It needs to be noted that the embodiments of the present application and the features in the embodiments thereof can be combined with each other if there is no conflict. The present invention will be described hereinafter in detail with reference to the drawings and in conjunction with embodiments.

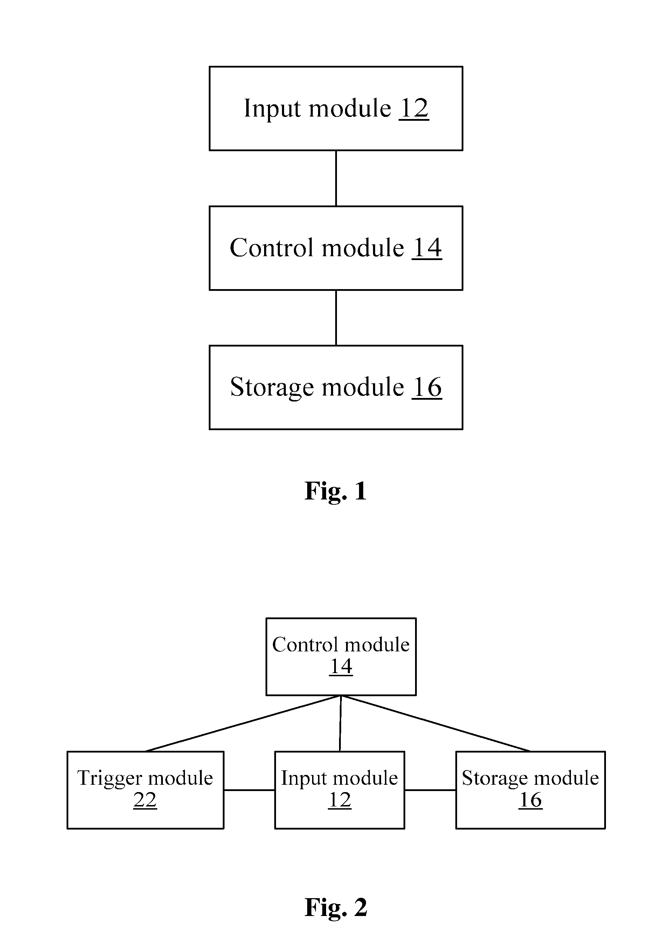

Fig. 1 is a structural block diagram of a mobile terminal according to the embodiments of the present invention, and the mobile terminal includes: an input module **12** for providing an interface for adding a plurality of contacts, wherein the interface includes an input control and a clear control, the input control is configured for generating an input instruction according to an operation of a user, and the clear control is configured for generating a clear instruction according to the operation of the user; a control module **14,** coupled to the input module **12,** for adding information of a plurality of contacts according to the input instruction from the input module and for deleting the information of the plurality of contacts on the interface for adding a plurality of contacts according to the clear instruction from the clear control; and a storage module **16,** coupled to the control module **14,** for storing the information of the plurality of contacts managed by the control module **14.** In this case, the operation of the user accepted by the input control can be that the user directly inputs contact information.

In the related art, only one number can be stored each time. In this embodiment, the input module is used to provide controls to accept operations from the user so as to generate an input instruction or a clear instruction. The control module adds the information of the plurality of contacts according to the input instruction. Then, the storage module stores the contact information managed by the control module. Thus, it achieves storing information of the plurality of contacts at one time, simplifies the flow of storing contact information, and improves user experience.

Fig. 2 is a structural block diagram of a mobile terminal according to a preferred embodiment of the present invention. This mobile terminal includes a trigger module **22** for activating the adding of contacts. The input module **12,** coupled to the trigger module **22,** is configured for constructing an interface for adding a plurality of contacts and for performing operations such as input and clear to the information of the plurality of contacts according to the operations of the user. The storage module **16,** coupled to the input module **12,** is configured for reading the information of the plurality of contacts inputted by the input module **12** and storing the same. The control module **14,** coupled to the trigger module **22,** input module **12** and storage module **16,** is configured for scheduling the trigger module **22,** input module **12** and storage module **16** as required, and adding contacts according to the input instruction from the input module **12** or deleting the information of the plurality of contacts on the interface for adding a plurality of contacts according to the clear instruction from the input module **12.** In this embodiment, adding a trigger module brings convenience to the user to open or close the function of adding contacts.

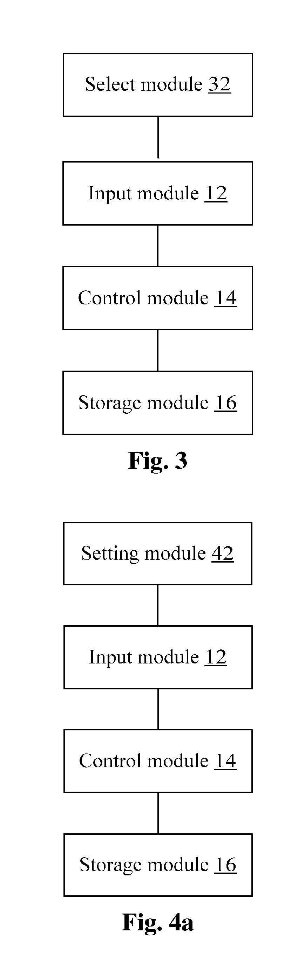

Fig. 3 is a structural block diagram of a mobile terminal according to another preferred embodiment of the present invention. Preferably, on the basis of the embodiment in Fig. 1, this mobile terminal further includes: a select module **32,** coupled to the input module **12,** for extracting information of a plurality of contacts from call records in batch; and the input module **12** is further configured for providing the information of the plurality of contacts extracted in batch on the interface for adding a plurality of contacts and setting a function of being able to be selected for the information of the plurality of contacts extracted in batch.

In this embodiment, by way of extracting information of the plurality of contacts from the call records and providing the extracted information of the plurality of contacts to the user via the interface for adding a plurality of contacts, the user can flexibly select the information to be stored from the extracted contacts, achieving the effect of storing information of the plurality of contacts in call records at one time.

Fig**.** 4a is a structural block diagram I of a mobile terminal according to yet another preferred embodiment of the present invention. Preferably, on the basis of the embodiment in Fig. 1, this mobile terminal further includes: a setting module **42** for providing a setting control in the interface for adding a plurality of contacts, wherein the setting control is configured for accepting the user to set storage locations for information of the plurality of contacts, and the storage module **16** is configured for storing information of the plurality of contacts in the storage locations.

In this embodiment, by way of providing a setting control, the user can conveniently set the storage locations of information of the plurality of contacts, enhancing the flexibility for storing the locations of information of the plurality of contacts.

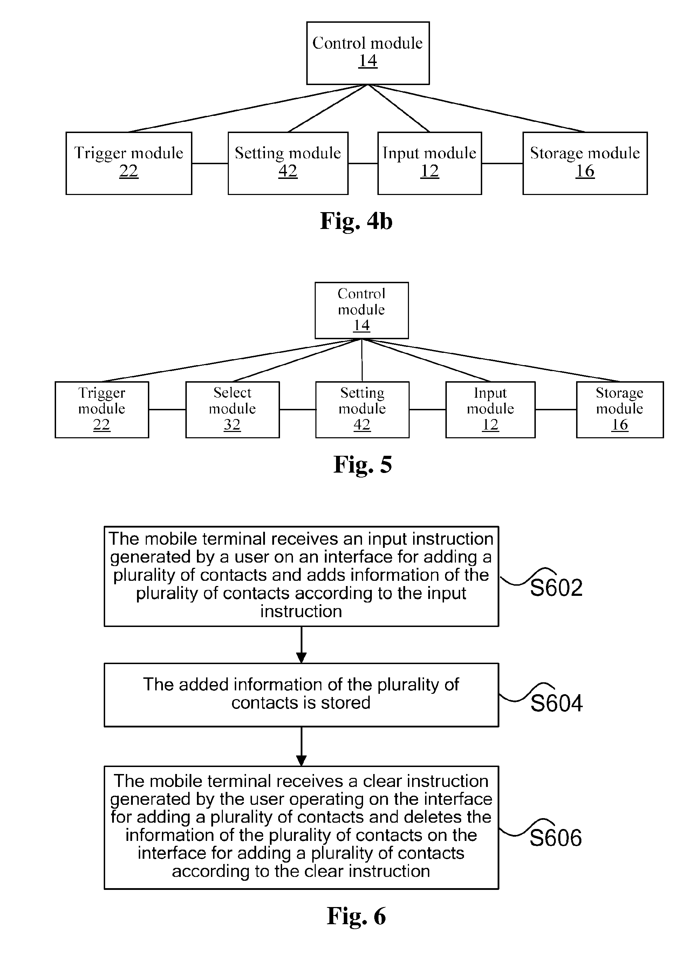

Fig. 4b is a structural block diagram II of a mobile terminal according to another preferred embodiment of the present invention. This mobile terminal includes a trigger module **22** for activating the adding of contacts. The setting module **42,** coupled to the trigger module **22,** is configured for setting storage locations and setting the manner for adding contacts. The input module **12,** coupled to the setting module **42,** is configured for constructing an interface for adding a plurality of contacts and for performing operations such as input and clear to the information of the plurality of contacts according to the operations of the user. The storage module **16,** coupled to the input module **12,** is configured for reading the information of the plurality of contacts inputted by the input module **12** and storing the same. The control module **14,** coupled to the trigger module **22,** setting module **42,** input module **12** and storage module **16,** is configured for scheduling the trigger module **22,** setting module **42,** input module **12** and storage module **16** as required and for adding contacts according to the input instruction from the input module **12** or deleting information of the plurality of contacts on the interface for adding a plurality of contacts according to the clear instruction from the input module **12.** In this case, the storage locations which can be set by the setting module **42** include: storage in the built-in memory of the mobile terminal, storage in the subscriber identity module (abbreviated as SIM) card, or storage in the built-in memory and the SIM card of the mobile terminal. The manner for adding contacts which can be set by the setting module **42** includes: the user designates the number of contacts to be added, and the user does not designate the number of contacts to be added. The setting manner that the user does not designate the number of contacts to be added includes: query during storage and/or not query during storage.

Preferably, the input module **12** is further configured for providing a manner control in the interface for adding a plurality of contacts, wherein the manner control is configured for accepting the user to designate the number of contacts to be added; and the control module **14** is further configured for stopping adding information of the plurality of contacts when the number of the added information of the plurality of contacts is equal to the number of contacts to be added designated by the user.

In this embodiment, the manner control is used to accept the user to designate the number of contacts to be added, and the operation of adding contacts is stopped when the number of the added information of the plurality of contacts is equal to the number of contacts to be added designated by the user. Thereby, it improves the controllability for adding contacts.

Preferably, the storage module **16** comprises a subscriber identity module (SIM) card and/or a built-in memory of the mobile terminal.

Since the SIM card and/or the built-in memory of the mobile terminal are commonly used storage areas in the mobile terminal, this embodiment can meet the applications requirements in most scenarios.

Fig. 5 is a structural block diagram of a mobile terminal according to still another preferred embodiment of the present invention. This mobile terminal includes: a trigger module **22** for activating the adding of contacts. A select module **32,** coupled to the trigger module **22,** is configured for constructing an interface for adding a plurality of contacts for the user to select in applications such as call records. The setting module **42,** coupled to the select module **32,** is configured for setting storage locations and setting the manner for adding contacts. The input module **12,** coupled to the setting module **42,** is configured for constructing an interface for adding a plurality of contacts and for performing operations such as input and clear to the information of the plurality of contacts according to the operations of the user. The storage module **16,** coupled to the input module **12,** is configured for reading the information of the plurality of contacts inputted by the input module **12** and storing the same. The control module **14,** coupled to the trigger module **22,** select module **32,** setting module **42,** input module **12** and storage module **16,** is configured for scheduling the trigger module **22,** select module **32,** setting module **42,** input module **12** and storage module **16** as required and for adding contacts according to the input instruction from the input module **12** or deleting information of the plurality of contacts on the interface for adding a plurality of contacts according to the clear instruction from the input module **12.**

Corresponding to the above mobile terminal, the embodiments of the present invention further provide a method for adding contact information. Fig. 6 is a flowchart of a method for adding contact information according to the embodiments of the present invention, and this method includes the following steps.

Step S602, the mobile terminal receives an input instruction generated by a user on an interface for adding a plurality of contacts and adds information of the plurality of contacts according to the input instruction.

Step S604, the added information of the plurality of contacts are stored.

Step S606, the mobile terminal receives a clear instruction generated by the operation of the user on the interface for adding a plurality of contacts and deletes the information of the plurality of contacts on the interface for adding a plurality of contacts according to the clear instruction.

In this embodiment, the operations from the user are received so as to generate an input instruction or a clear instruction. Information of the plurality of contacts is added according to the input instruction. Then the added information of the plurality of contacts is stored. Thus, it achieves storing information of the plurality of contacts at one time, simplifies the flow of storing contact information and improves user experience.

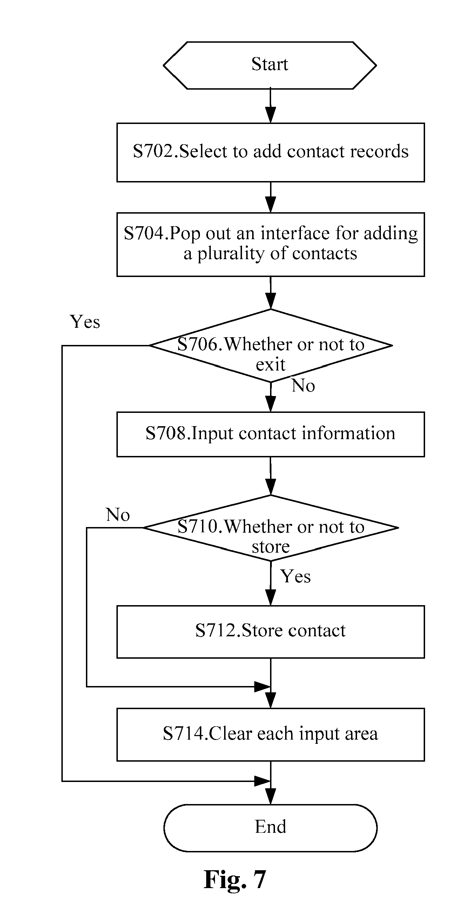

Fig. 7 is a flowchart of a method for adding contact information according to a preferred embodiment of the present invention. This method includes the following steps.

Step S702, the user selects to add contact records in the telephone book application and activates the flow of adding contacts.

Step S704, an interface for adding a plurality of contacts is constructed and popped out, waiting for the user to input contact information.

Step S706, the user can select whether or not to exit the flow of adding contacts, and if no, then perform Step S708, otherwise, end the flow.

Step S708, the user inputs information such as contact name and telephone number in the interface for adding a plurality of contacts.

Step S710, the user can select to store or cancel, if store is selected, then perform Step S712, and if cancel is selected, then perform Step S714.

Step S712, the inputted contact information in Step S708 is stored, and a record is added in the telephone book database.

Step S714, each input area on the interface for adding a plurality of contacts is cleared, and the flow ends.

Preferably, before the mobile terminal receives an input instruction generated by an operation of a user on an interface for adding a plurality of contacts and adds information of the plurality of contacts according to the input instruction, the method further comprises the steps that: the mobile terminal extracts information of the plurality of contacts from call records; and the mobile terminal provides the extracted information of the plurality of contacts on the interface for adding a plurality of contacts, sets a function of being able to be selected for the extracted information of the plurality of contacts, and adds the extracted information of the plurality of contacts according to the input instruction generated by the operation of the user.

In this embodiment, by way of extracting information of the plurality of contacts from the call records and providing the extracted information of the plurality of contacts to the user via the interface for adding a plurality of contacts, the user can flexibly select the information to be stored from the extracted contacts. It achieves the effect of storing information of the plurality of contacts in call records at one time.

Preferably, before the mobile terminal receives an input instruction generated by an operation of a user on an interface for adding a plurality of contacts and adds information of the plurality of contacts according to the input instruction, the method further comprises the steps that: the mobile terminal accepts the user to set storage locations for the information of the plurality of contacts, and stores the information of the plurality of contacts in the storage locations.

In this embodiment, the user can conveniently set the storage locations of information of the plurality of contacts, enhancing the flexibility for storing the locations of information of the plurality of contacts.

Preferably, before the mobile terminal receives an input instruction generated by an operation of a user on an interface for adding a plurality of contacts and adds information of the plurality of contacts according to the input instruction, the mobile terminal accepts the user to designate the number of contacts to be added via the interface for adding a plurality of contacts. After storing the added information of the plurality of contacts, stop adding information of the plurality of contacts when the number of the added information of the plurality of contacts is equal to the number of contacts to be added designated by the user.

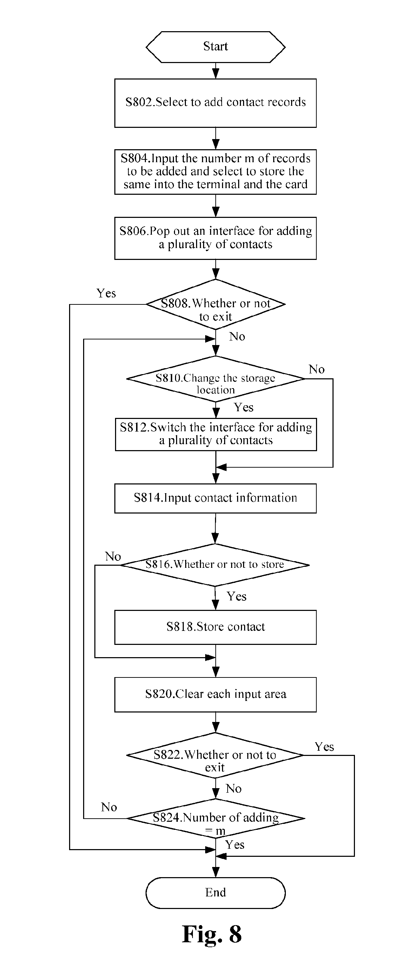

Fig. 8 is a flowchart of a method for adding contact records according to another preferred embodiment of the present invention, and the storage locations set by the user is to store the same into the mobile terminal and the SIM card. The manner for adding contacts set by the user is that the user designates the number of contacts to be added. This flow includes the following steps.

Step S802, the user selects to add contact records in the telephone book application and activates the flow of adding contacts.

Step S804, the user inputs the number of contacts to be added this time is m, and the user sets the storage locations to be mobile terminal and card.

Step S806, an interface for adding a plurality of contacts is popped out, waiting for the user to input contact information. The newly created interfaces for adding contacts in the local mobile terminal and the card may be different; therefore new interfaces for the local mobile terminal and the card are constructed respectively here. Switch between the two interfaces can be carried out by way of the buttons on the interfaces.

Step S808, the user can select whether or not to exit the flow of adding contacts, and if yes, then close the newly created interfaces for the local and card, and the flow ends, and if no, then perform Step S810.

Step S810, the user can change the storage location, and if change is selected, then perform Step S812, and if no change, then perform Step S814.

Step S812, it is switched to another interface for adding a plurality of contacts.

Step S814, the user inputs information such as contact name and telephone number.

Step S816, the user can select to store or cancel, if store is selected, then perform Step S818, and if cancel is selected, then perform Step S820.

Step S818, the inputted contact information in Step S814 is stored, and a record is added in the telephone book database.

Step S820, each input area on the interface for adding a plurality of contacts is cleared, waiting for the user to input next contact information.

Step S822, the user can select to exit the flow of adding contacts, and if the user selects not to exit, then perform Step S824.

Step S824, it is judged whether m records have be created, and if m records have been created, then it indicates that the adding is completed and exit the flow of adding contacts; and if there are less than m records, then repeat steps S805 to S811, till all the operations of creating contacts are completed.

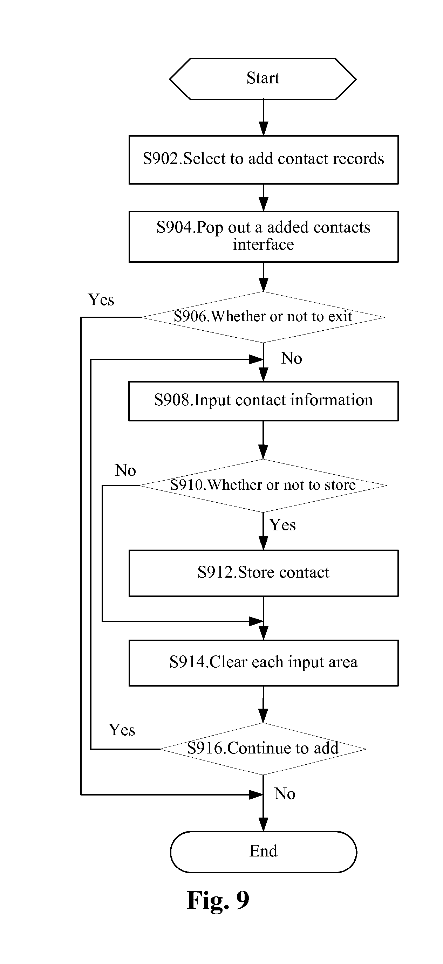

If the manner for adding contacts set by the user is that the user does not designate the number of contacts to be added, then the user further selects "query during storage" or "no query during storage". If the user selects query during storage, then the flow of adding contacts can refer to Fig. 9. Fig. 9 is a flowchart of a method for adding contact records according to yet another preferred embodiment III of the present invention. This method includes the following steps.

Step S902, the user selects to add contact records in the telephone book application and activates the flow of adding contacts.

Step S904, an interface for adding a plurality of contacts is constructed and popped out, waiting for the user to input contact information.

Step S906, the user can select whether or not to exit the flow of adding contacts, and if no, then perform Step S908, otherwise, the flow ends.

Step S908, the user inputs information such as contact name and telephone number in the interface for adding a plurality of contacts.

Step S910, the user can select to store or cancel, and if store is selected, then perform Step S906, and if cancel is selected, then perform Step S914.

Step S912, the inputted contact information in Step S908 is stored, and a record is added in the telephone book database.

Step S914, each input area on the interface for adding a plurality of contacts is cleared, and the flow ends.

Step S916, the user is queried whether or not to add contacts, and if yes, then return to Step S908, otherwise, the flow ends.

If the user selects "no query during storage", the flow shown in Fig. 7 is used for adding contacts.

In this embodiment, the user is accepted to designate the number of contacts to be added, and the operation of adding contacts is stopped when the number of the added information of the plurality of contacts is equal to the number of contacts to be added designated by the user. Thereby, it improves the controllability for adding contacts.

Preferably, the storage locations for storing the added contacts comprise a subscriber identity module (SIM) card and/or a built-in memory of the mobile terminal.

Since the built-in memory and SIM card of the mobile terminal are commonly used storage areas in the mobile terminal, this embodiment can meet the applications in most scenarios.

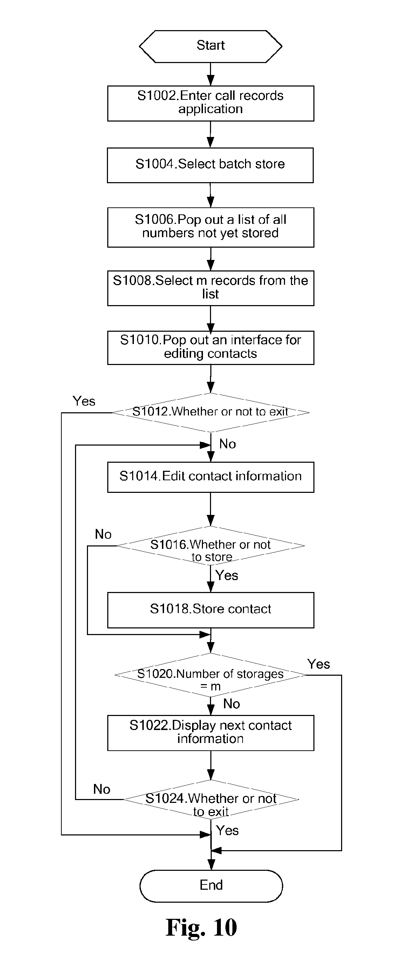

Fig. 10 is a flowchart of a method for adding contact information according to another preferred embodiment of the present invention. This method includes the following steps.

Step S1002, the user enters the call records application.

Step S1004, the user selects to store contacts in batch in the call records application.

Step S1006, the list of all the contact records in the call records application that have not been stored is displayed for the user to select.

Step S1008, the user selects m records from the list in Step S1006.

Step S1010, an interface for editing contacts is popped out, and the current contact information is displayed on the interface.

Step S1012, the user can select to exit storing in batch, and if the user selects not to exit, then perform Step S1014.

Step S1014, the user edits information such as contact name and telephone number.

Step S1016, the user can select to store or cancel, and if store is selected, then perform Step S1018, and if cancel is selected, then perform Step S 1020.

Step S1018, the inputted contact information in Step S1014 is stored, and a record is added in the telephone book database.

Step S 1020, it is judged whether m records have been edited, and if m records have been edited, then complete and exit the flow of storing in batch. If there are less than m records, then perform Step S1022.

Step S1022, the next contact information is displayed on the interface for editing contacts.

Step S 1024, the user can select to exit the flow of storing in batch, and if the user selects not to exit, then repeat steps S1014 to S1022, till all the operations of storing contacts are completed.

This embodiment is described by taking the example of storing the contacts not stored in the call records application into the telephone book in batch, but it is actually not limited to the call records application.

In summary, in the embodiments of the present invention, the input module provides an interface for adding a plurality of contacts, which enables the user to only select one create or edit operation and only invoke the edit interface once to add a plurality of contacts in the telephone book, achieving the effects of improving operation efficiency and improving user experience.

Apparently, those skilled in the art shall understand that the above-mentioned modules and steps of the present invention can be realized by using general purpose calculating device, can be integrated in one calculating device or distributed on a network which consists of a plurality of calculating devices. Alternatively they can be realized by using the executable program code of the calculating device. Thus, they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferred embodiments but not to limit the present invention. Various alternations and changes to the present invention are apparent to those skilled in the art. The scope defined in claims shall comprise any medication, equivalent substitution and improvement within the spirit and principle of the present invention.

## Claims

1. A mobile terminal, **characterized by** comprising:
an input module, configured for providing an interface for adding a plurality of contacts, wherein the interface includes an input control and a clear control, the input control is configured for generating an input instruction according to an operation of a user, and the clear control is configured for generating a clear instruction according to the operation of the user;
a control module, configured for adding information of a plurality of contacts according to the input instruction from the input module, and for deleting the information of the plurality of contacts on the interface for adding a plurality of contacts according to the clear instruction from the clear control; and
a storage module, configured for storing the information of the plurality of contacts added by the control module.

2. The mobile terminal according to Claim 1, **characterized by** further comprising:
a select module, configured for extracting information of the plurality of contacts from call records; and
the input module is further configured for providing the extracted information of the plurality of contacts on the interface for adding a plurality of contacts and for setting a function of being able to be selected for the extracted information of the plurality of contacts.

3. The mobile terminal according to Claim 1, **characterized by** further comprising:
a setting module, configured for providing a setting control in the interface for adding a plurality of contacts, wherein the setting control is configured for accepting the user to set storage locations of the information of the plurality of contacts; and the storage module is configured for storing the information of the plurality of contacts in the storage locations.

4. The mobile terminal according to any one of Claims 1 to 3, **characterized in that** the input module is further configured for providing a manner control in the interface for adding a plurality of contacts, wherein the manner control is configured for accepting the user to designate a number of contacts to be added; and the control module is further configured for stopping adding the information of the plurality of contacts when the number of the added information of the plurality of contacts is equal to the number of contacts to be added designated by the user.

5. The mobile terminal according to any one of Claims 1 to 3, **characterized in that** the storage module comprises a subscriber identity module (SIM) card and/or a built-in memory of the mobile terminal.

6. A method for adding contact information, **characterized by** comprising:
a mobile terminal receiving an input instruction generated by an operation of a user on an interface for adding a plurality of contacts and adding information of a plurality of contacts according to the input instruction;
storing the added information of the plurality of contacts; and
the mobile terminal receiving a clear instruction generated by the operation of the user on the interface for adding a plurality of contacts and deleting the information of the plurality of contacts on the interface for adding a plurality of contacts according to the clear instruction.

7. The method according to Claim 6, **characterized in that** before the mobile terminal receiving the input instruction generated by the operation of the user on the interface for adding a plurality of contacts and adding the information of the plurality of contacts according to the input instruction, the method further comprises:
the mobile terminal extracting information of the plurality of contacts from call records; and
providing the extracted information of the plurality of contacts on the interface for adding a plurality of contacts, setting a function of being able to be selected for the extracted information of the plurality of contacts, and the mobile terminal adding the extracted information of the plurality of contacts according to the input instruction generated by the operation of the user.

8. The method according to Claim 6, **characterized in that** before the mobile terminal receiving the input instruction generated by the operation of the user on the interface for adding a plurality of contacts and adding the information of the plurality of contacts according to the input instruction, the method further comprises:
the mobile terminal accepting the user to set storage locations for the information of the plurality of contacts; and
storing the information of the plurality of contacts in the storage locations.

9. The method according to Claim 6, **characterized by** further comprising:
before the mobile terminal receiving the input instruction generated by the operation of the user on the interface for adding a plurality of contacts and adding the information of the plurality of contacts according to the input instruction, the mobile terminal accepting the user to designate a number of contacts to be added via the interface for adding a plurality of contacts; and
after storing the added information of the plurality of contacts, stopping adding the information of the plurality of contacts when the number of the added information of the plurality of contacts is equal to the number of contacts to be added designated by the user.

10. The method according to Claim 8, **characterized in that** the storage locations comprise a subscriber identity module (SIM) card and/or a built-in memory of the mobile terminal.
